# EUROPÄISCHE PATENTSCHRIFT

(11) **EP 1 249 763 B1**
(45) Veröffentlichungstag und Bekanntmachung des Hinweises auf die Patenterteilung: **08.06.2005**
(21) Anmeldenummer: 02007033.0
(22) Anmeldetag: 27.03.2002
(51) Int. Cl.: G06F 13/40, H04L 12/40, H04L 12/46

(54) **Datenübertragungssystem**
Data transfer system
Systeme de transfert d'informations

(30) Priorität: 09.04.2001 DE 10117748
(43) Veröffentlichungstag der Anmeldung: 16.10.2002
(73) Patentinhaber: SIEMENS AKTIENGESELLSCHAFT, 80333 München (DE)
(72) Erfinder: Agne, Werner, 90522 Roethenbach (DE)

(56) Entgegenhaltungen:
- DE-A- 4 204 383
- DE-A- 19 727 460
- DE-A- 19 841 183
- DE-A- 19 916 894
- CENA G ET AL: "Standard field bus networks for industrial applications" COMPUTER STANDARDS AND INTERFACES, ELSEVIER SEQUOIA. LAUSANNE, CH, Bd. 17, Nr. 2, 15. Januar 1995 (1995-01-15), Seiten 155-167, XP004046736 ISSN: 0920-5489

## Beschreibung

Die Erfindung bezieht sich auf ein Datenübertragungssystem für Werkzeug- und Produktionsmaschinen, sowie Roboter, mit einer zentralen Datenleitung, von der stichförmige Datenleitungen abzweigen, in denen Signalverarbeitungseinheiten mit Sende- und Empfangsorganen angeordnet sind, die jeweils Daten seriell weiterleiten.

Es ist allgemein üblich, Werkzeug- und Produktionsmaschinen, sowie Roboter, mit Datenübertragungssystemen auszustatten, um eine Prozesskommunikation zu ermöglichen. Aus EP 0 129 853 B1 sind kooperierend miteinander verknüpfte Roboterzellen mit Antrieben bekannt. Jede Roboterzelle weist eine Einrichtung auf, um wenigstens von und zu einer benachbarten Roboterzelle auf einem Übertragungsmedium Information zu senden bzw. zu empfangen. Jede Antriebssteuerung bestimmt auf der Grundlage der vom Übertragungsmedium empfangenen Informationen die erforderlichen Bewegungen der eigenen Roboterzelle.

DE 197 27 460 offenbart ein Datenübertragungssystem mit durch Signalleitungen verbundene Signalverarbeitungseinheten. Die Daten werden seriell weitergeleitet. Eine Rückführung der Datenleitungen bildet einen Ring, der eine Erhöhung des Datendurchsatzes bewirkt. DE 42 04 383 offenbart ein Datenübertragungssystem mit einer Ringstruktur als Redundanz für den Fall eines Leitungsausfalls.

Aufgabe der Erfindung ist es, die Flexibilität und die Verfügbarkeit eines seriellen Datenübertragungssystems, sowie den damit verbundenen Maschinenkomponenten und somit die Verfügbarkeit des gesamten mit dem Datenübertragungssystem in Verbindung stehenden technischen Prozesses zu erhöhen.

Gemäß der Erfindung wird diese Aufgabe dadurch gelöst, dass eine Rückführung von der jeweils letzten zur ersten Signalverarbeitungseinheit der stichförmigen Datenleitung vorgesehen ist. Bei Ausfall einer Signalverarbeitungseinheit in einer stichförmigen Datenleitung ist die Kommunikation zu den hinter der ausgefallenen Signalverarbeitungseinheit liegenden Einheiten gestört. Diese Kommunikationsstörung wird durch den Aufbau einer ringförmigen Kommunikationsstruktur mit einer Rückführung der Datenleitung vorteilhaft vermieden.

Eine erste vorteilhafte Ausbildung der Erfindung ist dadurch gekennzeichnet, dass eine Rückführung von der jeweils letzten zur ersten Signalverarbeitungseinheit der zentralen Datenleitung vorgesehen ist. Bei Ausfall einer Signalverarbeitungseinheit in der zentralen Datenleitung sind alle dahinterliegenden Signalverarbeitungseinheiten gestört. Dies ist insbesondere nachteilig, als auch zusätzlich vorhandene Stichdatenleitungen komplett ausfallen. In vorteilhafter Weise wird somit durch den Aufbau einer ringförmigen Kommunikationsstruktur der zentralen Datenleitung diesem Zustand entgegengewirkt.

Eine weitere vorteilhafte Ausbildung der Erfindung ist dadurch gekennzeichnet, dass die erste Signalverarbeitungseinheit einer ringförmigen Kommunikationsstruktur als Verteilerknoten mit Gruppenleitfunktion ausgebildet ist. Der Verteilerknoten mit Gruppenleitfunktion kann dezentral bindende Richtlinien ausgeben.

Eine weitere vorteilhafte Ausbildung der Erfindung ist dadurch gekennzeichnet, dass in einer ringförmigen Kommunikationsstruktur ein Ersatzverteilerknoten eingebunden ist. Hierdurch kann in besonders vorteilhafter Weise bei einem Ausfall des Verteilerknotens der Betrieb weiterer Signalverarbeitungseinheiten der ringförmigen Kommunikationsstruktur aufrecht erhalten werden. Der Ersatzverteilerknoten übernimmt in diesem Fall die Funktion des Verteilerknotens mit Gruppenleitfunktion.

Eine weitere vorteilhafte Ausbildung der Erfindung ist dadurch gekennzeichnet, dass als Datenübertragungssystem ein Feldbussystem vorgesehen ist. Mit einem Feldbussystem können insbesondere die industriellen Anforderungen, wie beispielsweise eine hohe Verfügbarkeit, erfüllt werden.

Eine weitere vorteilhafte Ausbildung der Erfindung ist dadurch gekennzeichnet, dass als Datenübertragungssystem ein Ethernet vorgesehen ist. Durch den Einsatz eines Ethernet können auf zahlreiche Entwicklungen aus dem PC-Bereich zurückgegriffen werden.

Ausführungsbeispiele der Erfindung sind in den Zeichnungen dargestellt und werden im folgenden näher erläutert. Dabei zeigen:
- FIG 1: eine Struktur einer zentralen Datenleitung, von der stichförmige Datenleitungen abzweigen, in denen Signalverarbeitungseinheiten angeordnet sind,
- FIG 2: eine Datenübertragungsstruktur mit Rückführungen für stichförmige Datenleitungen und für eine zentrale Datenleitung und
- FIG 3: eine Datenübertragungsstruktur mit Rückführungen für stichförmige Datenleitungen und eine zentrale Datenleitung mit Verteilerknoten und Ersatzverteilerknoten.

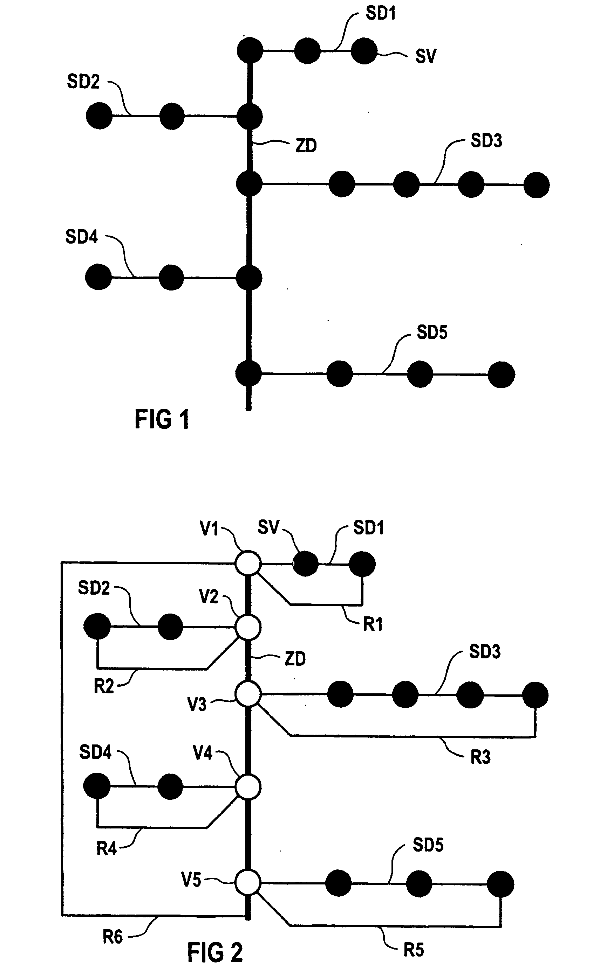

In der Darstellung gemäß FIG 1 ist in Form einer Strukturübersicht ein Datenübertragungssystem dargestellt. An einer zentralen Datenleitung ZD befinden sich Signalverarbeitungseinheiten, von denen stichförmige Datenleitungen SD1 bis SD5 abzweigen. Diese Kommunikationsstruktur kann beispielhaft für eine Produktionsmaschine sein, bei der zu jeder Signalverarbeitungseinheit SV mindestens ein elektrischer Antrieb zugeordnet ist. Bei einem Ausfall einer Signalverarbeitungseinheit SV in einer stichförmigen Datenleitung SD1 bis SD5 fallen ebenso alle dahinterliegenden Signalverarbeitungseinheiten SV aus. Die serielle Datenkommunikation ist gestört und kann zu den u.U. noch intakten Signalverarbeitungseinheiten SV nicht durchgeleitet werden.

Der Ausfall einer Signalverarbeitungseinheit SV auf der zentralen Datenleitung ZD führt sogar dazu, dass sämtliche nachgeordnete stichförmige Datenleitungen SD1 bis SD5 von der Kommunikation abgeschnitten sind.

In der Darstellung gemäß FIG 2 ist eine Datensystemstruktur mit Rückführungen R1 bis R6 für stichförmige Datenleitungen SD1 bis SD5 und eine zentrale Datenleitung ZD mit Verteilerknoten V1 bis V5 dargestellt. Von der jeweils letzten zur ersten Signalverarbeitungseinheit SV einer stichförmigen Datenleitung SD1 bis SD5 und der zentralen Datenleitung ZD ist eine Rückführung R1 bis R6 vorgesehen. Durch den Aufbau einer ringförmigen Kommunikationsstruktur kann bei Ausfall einer Signalverarbeitungseinheit SV die Kommunikation in Form eines offenen Rings um die ausgefallene Signalverarbeitungseinheit SV weitergeführt werden. Durch diese Maßnahmen wird die Verfügbarkeit des Datenkommunikationssystems einer Werkzeugoder Produktionsmaschine, als auch eines Robotersystems erhöht.

Der Ausfall des Datenkommunikationssystems wird im folgenden am Beispiel einer Druckmaschine näher erläutert. In einer Druckmaschine besitzt eine Rotation mehrere Antriebe, die jeweils über eine Signalverarbeitungseinheit SV verfügen. Fällt ein Antrieb bzw. eine Signalverarbeitungseinheit SV aus, so kann es sein, dass durch Umrüsten der Maschine die zu bedruckende Papierbahn über die noch verfügbaren Antriebe geleitet werden kann. Über die Kommunikationsstruktur kann den Einzelantrieben der Druck- oder Transportrollen eine bestimmte Funktion, beispielsweise ein Synchron- oder Bahngeschwindigkeitsgleichlauf, zugewiesen werden. Weiterhin können auch Informationen von Positionsgebern oder anderen Mess- oder Informationsgebern an die Signalverarbeitungseinheit SV übermittelt werden. Diese Information steht dann am Verteilerknoten V1 bis V5 bzw. im System zur Verfügung.

Für die Betreiber einer Druckmaschine kann die Verfügbarkeit einer Druckrotation von existentieller Bedeutung sein. Der Druckvorgang kann in eine zeitlich sehr eng geführte Verteilungslogistik eingebunden sein, wie dies beispielsweise bei dem Drucken von Tageszeitungen der Fall ist. Jede größere Unterbrechung führt zu einer zeitlichen Verschiebung und ist letztendlich auch mit erheblichen finanziellen Verlusten verbunden. Die Sicherstellung der Verfügbarkeit der Maschine als auch die Erhöhung der Flexibilität wird durch die eingangs genannte Erfindung gewährleistet.

In der Darstellung gemäß FIG 2 befinden sich auf der zentralen Datenleitung ZD Verteilerknoten V1 bis V5. Die Verteilerknoten V1 bis V5 sind mit einer Gruppenleitfunktion ausgebildet und geben den in der Gruppe hierarchisch in der Kommunikationsstruktur untergeordneten Signalverarbeitungseinheiten SV bestimmte Verhaltensschemata vor. So kann der Verteilerknoten V1 bis V5 mit Gruppenleitfunktion beispielsweise ein Signal vorgeben, auf das sich alle untergeordneten Signalverarbeitungseinheiten SV aufzusynchronisieren haben. Die Gruppenleitfunktionseigenschaft einer Signalverarbeitungseinheit SV ist in den Darstellungen durch einen offenen Kreis gekennzeichnet.

Die zentrale Datenleitung ZD ist ebenso mit einer Rückführung R6 ausgestattet. Somit führt ein ausgefallener Verteilerknoten V1 bis V5 nicht dazu, dass die nachgeordnete Kommunikationsstruktur komplett ausfällt.

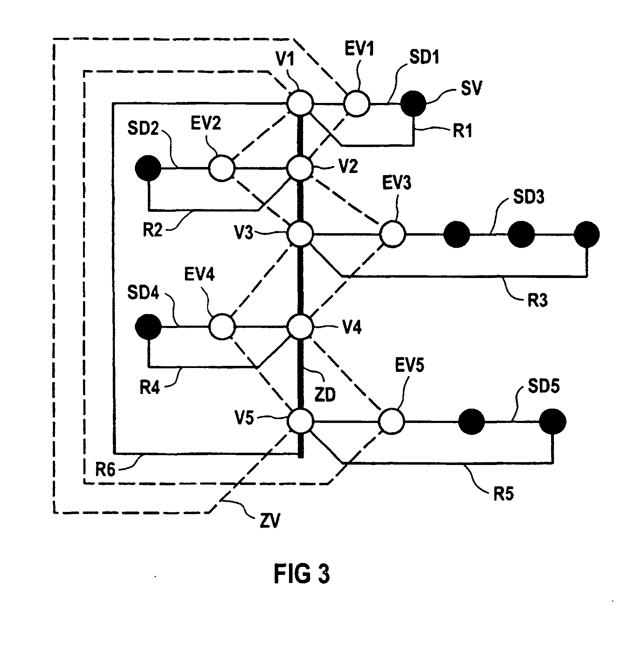

In der Darstellung gemäß FIG 3 sind Ersatzverteilerknoten EV1 bis EV5 in der ringförmigen Teilkommunikationsstruktur hinter den Verteilerknoten V1 bis V5 angeordnet. Die Ersatzverteilerknoten EV1 bis EV5 sind über Kommunikationsverbindungen mit den jeweils vor- und nachgeordneten Verteilerknoten V1 bis V5 mit Gruppenleitfunktion verbunden. Diese Zusatzverbindungen ZV sind in der Darstellung gemäß FIG 3 durch gestrichelte Linien von den Ersatzverteilerknoten EV1 bis EV5 zu den Verteilerknoten V1 bis V5 dargestellt.

Fällt ein Verteilerknoten V1 bis V5 mit Gruppenleitfunktion aus, so ist in der Konstellation mit Ersatzverteilerknoten EV1 bis EV5 gewährleistet, dass die jeweilige ringförmige Teilkommunikationsstruktur weiterarbeiten kann. Ein Ersatzverteilerknoten EV1 bis EV5 übernimmt in diesem Fall nahtlos die Gruppenleitfunktion und ist den verbliebenen Signalverarbeitungseinheiten SV der zugehörigen Teilkommunikationsstruktur vorstehend. Mit Hilfe der Zusatzverbindungen ZV wird der jeweils ausgefallene Verteilerknoten V1 bis V5 überbrückt.

Das Datenübertragungssystem kann mit unterschiedlichsten Bustechnologien ausgeführt sein. Für industrielle Anwendungen bietet sich ein Feldbussystem an, das hohe Anforderungen an die Systemzuverlässigkeit erfüllen kann. Auch Ethernet und ethernet-verwandte Bustechnologien bieten sich als Bussystem an.

Zusammenfassend sei noch erwähnt, dass mit der eingangs genannten Erfindung in besonders einfacher Weise durch eine Signalrückführung R1 bis R6 eine wesentliche Erhöhung der Flexibilität und Verfügbarkeit von Werkzeug- und Produktionsmaschinen, sowie von Robotern erreicht werden kann.

## Patentansprüche

1. Datenübertragungssystem für Werkzeug- und Produktionsmaschinen, sowie Roboter, mit einer zentralen Datenleitung (ZD)von der stichförmige Datenleitungen (SD) abzweigen, in denen Signalverarbeitungseinheiten (SV) mit Sende- und Empfangsorganen angeordnet sind, die jeweils Daten seriell weiterleiten, **dadurch gekennzeichnet, dass** die zentrale Datenleitung (ZD) einen Verteilerknoten (V1-V5) bzw. eine als Verteilerknoten wirkende Signalverarbeitungseinheit aufweist und von dem Verteilerknoten (V1-V5) bzw. der Signalverarbeitungseinheit eine stichförmige Datenleitung (SD1-SD5) abzweigt und eine Rückführung (R1-R5) von der jeweils letzten Signalverarbeitungseinheit (SV) der stichförmigen Datenleitung (SD1-SD5) zum Verteilerknoten (V1-V5) der jeweiligen stichförmigen Datenleitung (SD1-SD5) vorgesehen ist, wobei die Verteilerknoten (V1-V5) mit einer Gruppenleitfunktion ausgebildet sind und wobei die Verteilerknoten (V1-V5) zur Vorgabe bestimmter Verhaltensschemata in der Gruppe hierarchisch in der Kommunikationsstruktur untergeordneten Signalverarbeitungseinheiten (SV) vorgesehen sind, wobei bei Ausfall einer Signalverarbeitungseinheit (SV) eine Kommunikation in Form eines offenen Ringes um die ausgefallene Signalverarbeitungseinheit SV weiterführbar ist.

2. Datenübertragungssystem für Werkzeug- und Produktionsmaschinen, sowie Roboter, mit einer zentralen Datenleitung (ZD), von der stichförmige Datenleitungen (SD) abzweigen, in denen Signalverarbeitungseinheiten (SV) mit Sende- und Empfangsorganen angeordnet sind, die jeweils Daten seriell weiterleiten, **dadurch gekennzeichnet, dass** die zentrale Datenleitung (ZD) einen Verteilerknoten (V1-V5) oder eine als Verteilerknoten wirkende Signalverarbeitungseinheit aufweist eine Rückführung (R6) von der jeweils letzten zur ersten Signalverarbeitungseinheit (SV) der zentralen Datenleitung (ZD) vorgesehen ist, wobei die Verteilerknoten (V1-V5) mit einer Gruppenleitfunktion ausgebildet sind und wobei die Verteilerknoten (V1-V5) zur Vorgabe bestimmter Verhaltensschemata in der Gruppe hierarchisch in der Kommunikationsstruktur untergeordneten Signalverarbeitungseinheiten (SV) vorgesehen sind, wobei bei Ausfall einer Signalverarbeitungseinheit (SV) eine Kommunikation in Form eines offenen Ringes um die ausgefallene Signalverarbeitungseinheit SV weiterführbar ist.

3. Datenübertragungssystem nach Anspruch 1 oder 2, **dadurch gekennzeichnet, dass** die erste Signalverarbeitungseinheit (SV) als Verteilerknoten (V1-V5) mit Gruppenleitfunktion ausgebildet ist.

4. Datenübertragungssystem nach einem der vorstehenden Ansprüche, **dadurch gekennzeichnet, dass** in einer ringförmigen Kommunikationsstruktur ein Ersatzverteilerknoten (EV1-EV5) eingebunden ist.

5. Datenübertragungssystem nach einem der vorstehenden Ansprüche, **dadurch gekennzeichnet, dass** als Datenübertragungssystem ein Feldbussystem vorgesehen ist.

6. Datenübertragungssystem nach einem der vorstehenden Ansprüche, **dadurch gekennzeichnet, dass** als Datenübertragungssystem ein Ethernet vorgesehen ist.

## Claims

1. Data transmission system for machine tools and production machines, and also robots, with a central data line (ZD), from which there branch off stub-like data lines (SD) in which signal processing units (SV) are arranged, having transmitting and receiving elements which respectively pass on data in a serial form, **characterized in that** the central data line (ZD) has a distributor node (V1-V5) or a signal processing unit acting as a distributor node, and a stub-like data line (SD1-SD5) branches off from the distributor node (V1-V5) or the signal processing unit, and a return (R1-R5) from the last signal processing unit (SV) respectively of the stub-like data line (SD1-SD5) to the distributor node (V1-V5) of the respective stub-like data line (SD1-SD5) is provided, the distributor nodes (V1-V5) being formed with a group control function, and the distributor nodes (V1-V5) being provided for prescribing specific behaviour patterns to signal processing units (SV) at a hierarchically subordinate level in the group in the communication structure, wherein, when a signal processing unit (SV) fails, a communication can be taken further in the form of an open ring around the failed signal processing unit SV.

2. Data transmission system for machine tools and production machines, and also robots, with a central data line (ZD), from which there branch off stub-like data lines (SD) in which signal processing units (SV) are arranged, having transmitting and receiving elements which respectively pass on data in a serial form, **characterized in that** the central data line (ZD) has a distributor node (V1-V5) or a signal processing unit acting as a distributor node and, a return (R6) from the last to the first signal processing unit (SV) respectively of the central data line (ZD) is provided, the distributor nodes (V1-V5) being formed with a group control function, and the distributor nodes (V1-V5) being provided for prescribing specific behaviour patterns to signal processing units (SV) at a hierarchically subordinate level in the group in the communication structure, wherein, when a signal processing unit (SV) fails, a communication can be taken further in the form of an open ring around the failed signal processing unit SV.

3. Data transmission system according to Claim 1 or 2, **characterized in that** the first signal processing unit (SV) is designed as a distributor node (V1-V5) with a group control function.

4. Data transmission system according to one of the preceding claims, **characterized in that** a substitute distributor node (EV1-EV5) is incorporated in an annular communication structure.

5. Data transmission system according to one of the preceding claims, **characterized in that** a field bus system is provided as the data transmission system.

6. Data transmission system according to one of the preceding claims, **characterized in that** an Ethernet is provided as the data transmission system.

## Revendications

1. Système de transmission de données pour des machines-outils et pour des machines de production ainsi que pour des robots, avec une ligne de données centrale (ZD) de laquelle partent des lignes de données en dérivation (SD) dans lesquelles sont disposées des unités de traitement de signal (SV) avec des éléments d'émission et de réception qui retransmettent à chaque fois des données en série, **caractérisé par le fait que** la ligne de données centrale (ZD) comporte un noeud répartiteur (V1 à V5) ou une unité de traitement de signal faisant office de noeud répartiteur, qu'une ligne de données en dérivation (SD1 à SD5) part du noeud répartiteur (V1 à V5) ou de l'unité de traitement de signal, qu'une rétroaction (R1 à R5) est prévue de la dernière unité de traitement de signal (SV) respective de la ligne de données en dérivation (SD1 à SD5) au noeud répartiteur (V1 à V5) de la ligne de données en dérivation (SD1 à SD5) respective, que les noeuds répartiteurs (V1 à V5) sont conçus avec une fonction de gestion de groupe, que les noeuds répartiteurs (V1 à V5) sont prévus pour prescrire certains schémas de comportement à des unités de traitement de signal (SV) qui sont dans le groupe et qui sont subordonnées hiérarchiquement dans la structure de communication et que en cas de panne d'une unité de traitement de signal (SV), une communication peut se poursuivre sous la forme d'un anneau ouvert autour de l'unité de traitement de signal (SV) en panne.

2. Système de transmission de données pour des machines-outils et pour des machines de production ainsi que pour des robots, avec une ligne de données centrale (ZD) de laquelle partent des lignes de données en dérivation (SD) dans lesquelles sont disposées des unités de traitement de signal (SV) avec des éléments d'émission et de réception qui retransmettent à chaque fois des données en série, **caractérisé par le fait que** la ligne de données centrale (ZD) comporte un noeud répartiteur (V1 à V5) ou une unité de traitement de signal faisant office de noeud répartiteur, qu'une rétroaction (R6) est prévue de la dernière unité de traitement de signal (SV) respective à la première unité de traitement de signal de la ligne de données centrale (ZD), que les noeuds répartiteurs (V1 à V5) sont conçus avec une fonction de gestion de groupe, que les noeuds répartiteurs (V1 à V5) sont prévus pour prescrire certains schémas de comportement à des unités de traitement de signal (SV) qui sont dans le groupe et qui sont subordonnées hiérarchiquement dans la structure de communication et que en cas de panne d'une unité de traitement de signal (SV), une communication peut se poursuivre sous la forme d'un anneau ouvert autour de l'unité de traitement de signal (SV) en panne.

3. Système de transmission de données selon la revendication 1 ou 2, **caractérisé par le fait que** la première unité de traitement de signal (SV) est conçue comme un noeud répartiteur (V1 à V5) avec fonction de gestion de groupe.

4. Système de transmission de données selon l'une des revendications précédentes, **caractérisé par le fait qu'**un noeud répartiteur de remplacement (EV1 à EV5) est intégré dans une structure de communication en anneau.

5. Système de transmission de données selon l'une des revendications précédentes, **caractérisé par le fait qu'**un système de bus de terrain est prévu comme système de transmission de données.

6. Système de transmission de données selon l'une des revendications précédentes, **caractérisé par le fait qu'**un Ethernet est prévu comme système de transmission de données.
